# EUROPEAN PATENT APPLICATION

(11) **EP 4 749 293 A1**
(43) Date of publication of application: **27.05.2026**
(21) Application number: 24214212.3
(22) Date of filing: 20.11.2024
(51) Int. Cl.: G01N 35/10

(54) **A LABORATORY AUTOMATION APPARATUS AND METHOD FOR CHECKING THE AVAILABILITY OF PIPETTING TIPS IN PIPETTING TRAYS**

(71) Applicant: TECAN Trading AG, 8708 Männedorf (CH)
(72) Inventor: FREI, Luca, 8634 Hombrechtikon (CH)
(74) Representative: Troesch Scheidegger Werner AG

(57) **Abstract**

Method for detecting pipetting tips in a laboratory automation apparatus including an electrode and reference electrode providing a capacitive sensor. A pipette tray holding pipetting tips is located on a working table between the electrode and the reference electrode. The pipette tray includes passages organized in a matrix. The pipetting tips have a proximal collar coupled to a pipetting tube and the tubes are received in the passages with the top surface of each collar vertically distanced from the top surface of the tray. The electrical conductivity of the tray differs from the electrical conductivity of the pipetting tips. The method includes scanning the tray by relative movement between the tray and the electrode while an input signal is directed to the capacitance sensor and receiving a feedback signal from the sensor to detect a change in capacitance related to the presence or non-presence of pipetting tips in the tray.

## Description

### FIELD OF THE INVENTION

The current invention relates to a method for detecting pipetting tips in a laboratory automation apparatus and to a laboratory automation apparatus with a pipetting tip detection functionality. Furthermore, a computer program for executing the method by a computer is disclosed and a computer readable medium for storing the computer program.

### BACKGROUND OF THE INVENTION

The automation of workflows in diagnostic or clinical laboratories is of key importance as the number of samples to be tested has significantly increased such that certain operations require laboratory automation apparatuses for tasks that used to be executed by a laboratory assistant. The laboratory automation apparatuses contributed for example to the fast development of high-speed test methods that could be performed at very high sample numbers at relatively low cost during the COVID pandemic. The laboratory automation apparatuses include: i) robotic arms for moving or handling labware components on a working table of the laboratory automation apparatus; ii) automated liquid handling devices for aspirating and/or dispensing liquids in the labware; iii) sample processing equipment such as stirrers, heaters, coolers, thermocyclers analytical testing devices such as microplate readers, DNA library preparation equipment, DNA sequencers including microfluidic chips, and the like.

An automated liquid handling device may include a plurality (for example 8) pipetting heads or pipetting channels coupled to a robotic arm which may be separate from the robotic arm used for handling the labware components. Labware components may comprise single use labware like tubes, microplates, troughs, lids for microplates, solid phase extraction columns and the like. Labware components may also comprise racks or trays for holding the labware and for positioning it on defined positions on the working table. The automated liquid handling devices may use disposable pipetting tips that are releasably coupled to the pipetting heads and are intended for single use. Pristine pipetting tips need to be attached to the pipetting head for each step to be executed by the laboratory automation apparatus to prevent cross contamination between samples, dilution of samples or mixing of processing liquids in the liquid storage containers. Processing liquids may comprise reagents, buffer solutions, solvents, staining solutions and the like.

The pipetting tips need to be available on the working table of the laboratory automation apparatus and are stored in trays and, depending on the size of the pipetting tips, up to 384 tips may be stored in a tray. The trays include a plurality of passages for receiving the pipetting tube of a pipetting tip and a collar is attached to the pipetting tube which abuts the rim of each passage thereby releasably holding the tip to the tray. The collar is sleeve-shaped and the inner surface may be adapted for engaging a pipetting head during pick up of the tips from the tray by the pipetting head. The plurality of passages is preferably arranged in a matrix of rows and columns according to a standardized ANSI/SLAS format, such as, for example the 96 well plate format. The liquid handling device may include the plurality of pipetting heads for simultaneous pick-up of a row or column of pipetting tips from a tray such that multiple samples may be processed simultaneously increasing the efficiency for the laboratory automation apparatus.

The operator prepares the laboratory automation apparatus by placing the labware components, test samples and processing fluids required for a test method onto the working table of the laboratory automation apparatus and programs the workflow for the test method which is automatically executed. The labware includes the trays with pipetting tips which may be stacked for space efficient storage of the pipetting tips. The pipetting tips may have different sizes for different volumes to be aspirated/dispensed during different steps in the programmed workflow.

Not all pipetting tips in a tray may be used during an experiment and half empty trays may be discarded as a full tray may be required for a subsequent run. Additionally, there may be missing tips in a tray or different test procedures require the pick of a section of the pipetting tips in a row or column on the tray. This may lead to missing pipetting tips in a row or column on the tray.

The laboratory automation apparatus may be equipped with a capacitance measuring unit that is attached to the pipetting head and this measuring unit may be used for different purposes as explained below.

US20240217102A1 discloses the accurate positioning of a robotic arm on the working table of the laboratory automation apparatus. The robotic arm includes an electrode which is scanned over a capacitive reference object forming a measuring capacitor with the electrode. The reference object is at a known location and has a specific 3-dimensional shape, for example a recessed triangle, defining different heights for the dielectric medium (air) in the measuring capacitor. Detection of the shape of the reference object is used for accurate positioning of the robotic arm.

US20160356737A1 discloses an electronic circuit for detecting the change in capacitance in a measuring capacitor formed between an electrode (pipetting tip) and the working table for liquid level detection in a test tube on the working table. The measuring capacitor distinguishes between the presence of liquid or foam in the test tube. The electronic circuit includes at least one comparator unit detecting the charging time for the measuring capacitor in response to an input signal directed to the electrode.

WO2018015422 discloses a pipetting device having a capacitance measuring unit including an electrode attached to the pipetting heading forming a capacitor with a reference electrode. The pipetting head is lowered such that the electrode contacts the conductive pipetting tip thereby changing the size and shape of the electrode leading to a difference capacitance which is detected by the measuring unit.

### DESCRIPTION OF THE INVENTION

Missing pipetting tips in a tray, mix-up of different tip sizes and mispositioning of the trays on the working table or in a holder on the working table may impact the uninterrupted workflow during long-term testing. The reliability and robustness of the automated procedure may be jeopardized leading to an increased waste of pipetting tips and waste of expensive test liquids used for, for example immunoassays.

There is a need for robust and reliable test methods and test equipment for automating the laboratory operations which require minimum intervention of an operator once a test run has been started.

It is an objective of the present invention to provide a reliable and robust apparatus and method for detecting the presence of pipetting tips in a tray. It is a further object to provide a computer program for executing the method.

Those objectives are solved by using capacitive sensors that are part of the pipetting head of the laboratory automation apparatus as presented in the independent claims, further exemplary embodiments are evident from the dependent claims and the following description including the Figures.

A first aspect of the disclosure relates to a method for detecting pipetting tips in a laboratory automation apparatus. The method for detecting pipetting tips in a laboratory automation apparatus includes an electrode and a reference electrode providing a capacitive sensor. A pipette tray holds pipetting tips and is located on a working table between the electrode and the reference electrode. The pipette tray includes a plurality of passages for holding the pipetting tips, the passages may be organized in a matrix. The pipetting tips include a proximal collar coupled to a pipetting tube and the tubes are received in the passages with the top surface of each collar vertically distanced from the top surface of the tray. The method includes scanning the tray by relative movement between the tray and the electrode while an input signal is directed to the capacitance sensor and receiving a feedback signal from the sensor to detect a change in capacitance related to the presence or non-presence of pipetting tips in the tray.

The laboratory automation apparatus includes a working table defining an x-y plane and the capacitive sensor including the electrode and the reference electrode. The pipette tray is located on the working table between the electrode and the reference electrode, and the pipette tray has a plurality of passages that may be organized in a matrix arrangement. The apparatus further includes a plurality of pipetting tips each having a proximal collar coupled to a pipetting tube. The collar of the pipetting tips is adapted to engage a pipetting head of the laboratory automation apparatus. The pipetting tubes are received in at least a part of the plurality of passages whereby the bottom surface of the collars abut the top surface of the tray such that the top surface of the collars is vertically distanced from the top surface of the tray by the collar height. The pipetting tips are releasably engaged with the tray in that they can be removed from the tray by pick-up by, and engagement with, the pipetting head. The electrical conductivity of the tray may differ from the electrical conductivity of the pipetting tips. The electrical conductivity of the pipetting tips may exceed the electrical conductivity of the trays or, vice versa, the electrical conductivity of the tray exceeds the conductivity of the tips. The method includes the following steps:
- scanning the tray by relative movement between the tray and the electrode while an input signal, such as a source voltage, is directed to one of the electrodes of the capacitance sensor and detecting a feedback signal by the electrode or the reference electrode,
- sending the feedback signal to a processor or microprocessor which is configured to detect a change in capacitance or impedance for the capacitive sensor thereby identifying the presence or non-presence of pipetting tips in the tray.
The reference electrode includes the working table which may be grounded. The reference electrode may be a dedicated electrode shaped to optimize the feedback signal, for example to improve the signal to noise ratio or detection limit for the method. There may be components on the working table or surrounding the electrode which are non-desired for the capacitance measurement as they result in parasitic capacitive responses which may be eliminated using reference scans that may be deducted from tray scans.

The pipette tray is an essentially flat rectangular plate comprising the plurality of passages for receiving the pipetting tips. The matrix arrangement for the passages may be according to a pattern corresponding to an ANSI/SLAS format, for example according to a 96- or 384-well plate format.

The pipetting tips may be disposable or reusable pipetting tips. The collar of each tip abuts a rim of the passages such that the tips can be easily placed and removed from the passages in the tray. The collar of the tips includes a sleeve with a side wall configured to receive and engage a pipetting head for pick-up of the pipetting tips from the tray. The engagement between the pipetting head and the collar may be a friction-fit and/or a form-fit engagement and/or a snap-in mechanism.

The pipetting head, which may also be called a pipetting channel, is part of a pipettor that may include a liquid supply unit, a syringe pump unit an Air Displacement Pipetting (ADP) unit or an Air Restriction unit (ARP). The pipettor may also include an air displacement unit with a piston that can be moved in a barrel generating under/over pressure in the pipetting tip for aspirating and dispensing liquids.

The pipette tray may be partially filled with pipetting tips such that a part of the passages are empty leaving gaps between pipetting tips present in the tray. The absence of pipetting tips may be intended as not all tips in the tray have been used in a previous experiment programmed on the laboratory automation apparatus or pipetting tips are missing from a tray as delivered or pipetting tips have been manually removed from the tray.

The electrical conductivity of the tray may be below the electrical conductivity of the pipetting tips or, vice versa, the conductivity of the tips may be below the conductivity of the tray. The difference in electrical conductivity may improve the feedback signal for detecting the tips. The pipetting tips may be disposable pipetting tips made by injection molding of a partially conductive polymer or polymer compound. The pipetting tips may be made from a carbon black or graphite filled polymer such as polypropylene. Alternatively, an electrically conductive inlay or coating is part of the pipetting tips, for example using two component injection molding.

Capacitive detection of the presence or absence of the pipetting tips before starting an experiment or test run on the laboratory automation apparatus improves the reliability of the system as test runs will not be started unless the trays are full or at least equipped with a sufficient number of pipetting tips required for a run of tests. Alternatively, the scans are used for detecting the location of the tips before starting the run for selective pick-up of the pipetting tips such that also partially filled trays may be used in a test run and the partially filled trays are not discarded or need to be refilled for obtaining a full tray.

In an embodiment of the present disclosure, the laboratory automation apparatus further includes a robotic arm configured to be moved in a space above the working table and the pipetting head is coupled to the robotic arm for movement above the working table. The electrode is again coupled to the pipetting head such that the robotic arm may move the pipetting head, the electrode and/or a pipetting tip coupled to the pipetting head in the space above the working table. The laboratory automation apparatus further includes a processor which is operatively coupled to the robotic arm and to the electrode by an electronic circuit. The processor is configured for controlling the movement of the robotic arm with the pipetting head and the electrode and for processing the feedback signals received from the capacitive sensor. The tray is located at a fixed tray position on the working table for executing the method wherein scanning the tray by relative movement between the tray and the electrode includes:
- directing the robotic arm to the tray position on the working table using the processor,
- lowering the pipetting head by the robotic arm to a scan height defined by a z-position above the pipette tray leaving an air gap between the top surface of the collars of the pipetting tips and the electrode, and
- moving the electrode parallel to the x-y plane above the tray.

The electrode may include a flat distal surface that is preferably oriented parallel to the working table. Moving the electrode with respect to the working table for scanning a tray that is at a fixed position may provide a flexible solution as the electrode may be moved to several trays which are each located at their respective fixed positions.

In another embodiment of the present disclosure the laboratory automation apparatus further includes the electrode located at a fixed position above the working table defined by the x-y position and a fixed scan height in the z direction. A shuttle is configured for linear movement below the electrode along a shuttle pathway and the tray with the pipetting tips is configured to be positioned onto the shuttle such that the shuttle with the tray may be moved below the electrode. A processor is operatively coupled to the shuttle and to the electrode by an electronic circuit. The processor is configured for controlling the movement of the shuttle such that scanning the tray by relative movement between the tray and the electrode includes moving the shuttle with the tray below the electrode along the shuttle pathway.

The shuttle pathway may include a linear guide track for guiding the shuttle and the shuttle may be dimensioned to hold pipetting trays with outer dimensions according to an ANSI/SLAS standard format. The linear movement of the shuttle may be provided by guiding features on the shuttle and on the working table providing a key-groove interaction. The shuttle movement may be provided by a spindle drive, a belt drive, a magnetic drive and the like. The tray may be releasably coupled or connected to the shuttle. The shuttle pathway may be a closed pathway with at least partially linear track features connected by corner sections. This may provide a conveyer belt type of arrangement of shuttles each carrying a pipette tray for efficient checking the presence or absence of pipetting tips in each tray.

The electrode in the above-mentioned embodiments may be part of the pipetting head or is the distal end of a pipetting tip attached to the pipetting head and the pipetting tip is at least partially electrically conductive. The distal end of the pipetting head with an adapter cone for holding the pipetting tips itself may provide the electrode. Alternatively, a dedicated electrode is attached to, or part of the pipetting head, for example a conductive pin such as a steel pin may be attached or attachable to the pipetting head.

The robotic arm may include a plurality of pipetting heads in a row arrangement and each pipetting head includes an electrode coupled to the pipetting head providing a capacitive sensor with the reference electrode, for example with the working table. The plurality of pipetting heads may be distanced from each other by a fixed or variable distance within the row. For the latter a spreading device is part of the robotic arm.

A robotic arm with a plurality of pipetting heads or pipetting channels may increase the throughput or decrease cycle times for the laboratory automation apparatus or for the method.

In another embodiment, the method or laboratory automation apparatus for detecting the presence or absence of pipettes may further include a pipetting tip size detection functionality by including the following optional features:
- moving the pipetting head from the center of the passage where a target pipetting tip has been detected to a location of the collar for the target pipetting tip. The collar location is the x-y position on the working table for the rim protruding in the proximal direction from the collar of the target pipetting tip.
- lowering the electrode from the scan height to contact the top surface of the rim of the collar,
- directing an input signal to the capacitance sensor and detecting the feedback signal from the electrode,
- sending the feedback signal to the processor which is configured to detect a change in capacitance related to the electrode configuration and identify the size of the target pipetting tip based on the feedback signal.
The electrode may be first moved from the scan height above the pipette tray to the collar location followed by force-controlled lowering of the pipetting head including the electrode until the electrode and/or pipetting head abuts the rim of the collar. An example for detecting the abutment between the collar and the head is using an increased motor current of the electric motor driving the pipetting head along the z-axis. The input signal or source voltage directed to the capacitance sensor, i.e. to the electrode and/or to the reference electrode, may be the same input signal as used for detecting the absence or presence of pipetting tips in the trays or a different input signal may be used for detecting the size of the pipetting tips. The capacitance of the capacitive sensor depends, amongst other factors on the size (surface area) of the electrode. Contacting the electrode to the at least partially electrically conductive pipetting tip increases the size or length of the electrode leading to a feedback signal. The pipetting tips may have sizes respectively working volumes ranging between 10 µl and 1000 µl and each tip size may have a different length varying between, for example 10 mm and 100 mm. Each size provides a different feedback signal upon contact with the electrode allowing for identification the size of the pipetting tips. Detecting the size of the pipetting tips may increase the versatility of the apparatus and/or method when using the apparatus in that different pipetting tip sizes required for different steps during an analytical test run may be automatically recognized.

In another embodiment, the laboratory automation apparatus or the method using the apparatus includes a tray misplacement or tray tilting detection feature. The method comprises the following optional steps:
- directing at least one pipetting head to a first corner of the tray using the robotic arm and lowering the pipetting head to contact the tray to identify a first z-reference height,
- raising the pipetting head and directing the at least one pipetting head to second corner opposite to the first corner of the tray,
- lowering the pipetting head to contact the tray to identify a second z-reference height,
- calculating an average z-reference height defining the reference for the scan height for moving the pipetting head above the tray. The steps may be repeated for detecting the reference height on a plurality of positions, or on a plurality of corners of the tray.

The first and second z-reference heights are received by the processor and used to calculate the difference between the reference heights for detecting misplacement or tilting of the tray when the difference exceeds a predefined threshold value. The threshold value may be stored in a storage unit of the processor or electronic circuit. Detecting misplacement or tilting of pipetting trays before starting an analytical experiment using the laboratory automation apparatus may prevent jamming/blocking of pipetting tips in trays when a vertically oriented pipetting head attempts to engage the collar of a pipetting tip placed in a tilted pipetting tray.

The plurality of passages in the tray is arranged in a matrix such that a free space is available above the top surface of the tray between the collars of two adjacent pipetting tips and the change in capacitance is detected as a change in impedance, for example charge time, for the capacitive sensor which is related to the vertical step between the top surface of the collar and the top surface of the tray and/or the difference in electrical conductivity between the tray and the pipetting tips. The electrode is at a fixed scan height during the relative movement between the tray and the electrode such that vertical steps between the top surface and the tray and the top surface of the collar result in a different vertical height of the air gap for the capacitive sensor during the scan which contributes to the change in capacitance. The difference in electrical conductivity between the tray and the pipetting tips implies that each part has a different dielectric constant which also contributes to a change of impedance of the capacitive sensor during relative movement between the tray and the electrode.

The change in capacitance may be detected by detecting the charging/discharging characteristics of the capacitive sensor, basically by opening and closing a switch in the circuitry providing the source voltage to the electrode. Alternative options operate the capacitive sensor in an oscillatory mode as there are multiple options for the skilled person for operating the capacitive sensor.

The feedback signals are used for detecting the change in capacitance related to the presence or absence of the pipetting tips and/or to the size of the pipetting tips. The signals may be averaged using multiple scans over the tray. Alternatively, reference scans without a tray on the working table are executed prior to scanning the tray and the reference scans may be subtracted from subsequent tray scans to improve the signal-to-noise ratio or the detection limit or sensitivity of the method. Alternatively, reference scans with an tray having all passages empty on the working table are executed prior to scanning the tray and the reference scans may be subtracted from subsequent tray scans to improve the signal-to-noise ratio or the detection limit or sensitivity of the method. A first scan along an axis (x- or y-axis) may be combined with a second scan along the same axis in the opposite direction for averaging the signals. A scan along a first axis may be followed by a second scan along the axis perpendicular to the first axis. Scans may be executed above single rows or columns of the matrix of passages.

In case the laboratory automation apparatus includes a plurality of pipetting heads or plurality of pipetting channels each equipped with an electrode, then all pipetting heads may simultaneously move in a parallel above the tray for the scan.

The tray preferably may have a rectangular shape and the matrix arrangement for the passages in the tray corresponds to an ANSI/SLAS format (for example according to a 96 well-plate standard ANSI SLAS 4-2004 (R2012): Well Positions).

The processor may be configured to generate an image of the matrix arrangement for the pipetting tips presenting the absence or presence of pipetting tips. The generated image may be displayed on a display unit of the laboratory automation apparatus and/or may be sent to an external device, for example to a cellular phone. The image may be generated in-situ during the scan of the tray.

Another aspect of the present disclosure relates to the laboratory automation apparatus with a pipetting tip detection functionality whereby the apparatus includes a working table defining an x-y plane, a robotic arm configured to be moved in the space above the working table and a pipetting head coupled to the robotic arm. An electrode is coupled to the pipetting head which provides a capacitive sensor with a reference electrode. A processor is operatively coupled to the robotic arm and to the capacitive sensor by an electronic circuit. The processor is configured for directing and controlling the movement of the robotic arm with the pipetting head including the electrode. A pipette tray is located at a tray position on the working table between the electrode and the reference electrode. The pipette tray may be moved on a shuttle relative to a fixed electrode as explained above for the method, or the tray is located at a fixed tray position and the pipetting head with the electrode is moved relative to the fixed tray. The pipette tray includes a plurality of passages which are organized in a matrix arrangement. At least a part of the plurality of passages of the tray is filled with pipetting tips and each tip includes a proximal collar coupled to a distally oriented pipetting tube. The collar of the pipetting tubes includes a cylinder with a side wall surrounding a proximal opening, and the distal end of the collar is coupled to the pipetting tube. The pipetting tube includes a cone-shaped sleeve that is coupling the distal opening of the collar to a distal dispensing opening. The cylinder of the collar includes an outer surface connecting the top surface of the collar to the bottom surface of the collar and both the top and bottom surfaces are oriented perpendicular to the longitudinal axis of the pipetting tip. The axial distance between the top and bottom surface of the collar defines the collar height. The bottom surface may be provided as a continues surface or may be formed by a plurality of sections of ribs radially extending from the outer surface of the collar.

The collar of each pipetting tip, preferably the inner surface of the cylinder, is adapted to receive the adapter or adapter cone of the pipetting head of the robotic arm. For example, a distal cone on the pipetting head may be pressed into the inner surface of the collar of the pipetting tip for a friction fit engagement. Alternatively, the pipetting head includes a clamping system which may be radially expanded after introduction of the head into the collar and the outside surface of the expanded clamping system matches a complementary inner surface of the collar for a form-fit engagement.

The pipetting tubes are received in at least a part of the plurality of passages such that the bottom surface of each collar abuts the top surface of the tray thereby releasably holding the pipetting tips to the tray. The bottom surface of the collar abuts the rim section of the top surface surrounding the passage in the tray. The top surface of each collar is vertically distanced from the top surface of the tray by the collar height when the tips are engaged with the tray.

The passages are arranged such in the tray to leave a free space available for the top surface of the tray between the collars of two adjacent pipetting tips when the two adjacent pipetting tips engage two adjacent passages in the tray.

The electrical conductivity of the tray differs from the electrical conductivity of the pipetting tips and either the conductivity of the pipetting tip exceeds the conductivity of the tray, or the conductivity of the tray exceeds the conductivity of the pipetting tip.

The robotic arm is configured to hover the pipetting head with the electrode over the tray or, alternatively the tray is configured to be moved below a fixed electrode.

The processor is configured to direct an input signal or source voltage to the electrode and receive a response signal from the capacitance sensor and to identify the presence or non-presence of pipetting tips in the tray by detecting a change in capacitance related to the vertical step between the top surface of the collar and the top surface of the tray and/or the difference in electrical conductivity (dielectric constant) between the tray and the pipetting tips.

The electrode of the laboratory automation apparatus may include the pipetting head, for example the distal end of the pipetting head or the adapter cone of the pipetting head. Alternatively, the distal end of an at least partially conductive pipetting tip attached to the pipetting head provides the electrode.

The pipetting tip may be a disposable pipetting tip constructed from least partially electrically conductive polymer compound using injection molding. The compound may be a graphite or carbon filled polymer providing a percolating network for the conductivity. The polymer may be selected from polyethylene or polypropylene.

The laboratory automation apparatus may include a plurality of pipetting heads arranged in a row as described above.

Another aspect of the present disclosure relates to a computer program including instructions which, when the program is executed by a computer, cause the computer to carry out the method for detecting pipetting tips in a laboratory automation apparatus and/or the method for detecting the size of the pipetting tips in a tray and/or the method for detecting the tilting of the pipetting tray. The computer program may be executed by a processor or microprocessor which may be integrated in the laboratory automation apparatus or may be remote for wireless control and execution of the method.

Another aspect of the present disclosure relates to a computer-readable medium having stored thereon the computer program of claim. The computer readable medium may be a disc, USB stick or a hard drive. The computer readable medium may be part of a cloud solution.

These and other aspects of the invention will be apparent from and elucidated with reference to the embodiments described hereafter whereby embodiments or aspects of embodiments may be combined.

### BRIEF DESCRIPTION OF THE DRAWINGS

Embodiments of the present invention are described in more detail with reference to the attached drawings presenting:
- Figure 1:: Laboratory automation apparatus,
- Figure 2:: Schematic drawing for a robotic arm positioned on the working table of a laboratory automation apparatus,
- Figure 3:: Top view on the working table of a laboratory automation apparatus with labware components, testing and sample processing equipment,
- Figure 4:: Perspective view for a tray with pipetting tips positioned on the working table,
- Figure 5:: Perspective view of pipetting tips for pipetting different volumes,
- Figure 6:: Schematic drawing of a laboratory automation apparatus with an electrode for scanning the pipette tray by relative movement between the tray and the electrode,
- Figure 7:: Detailed view of Figure 6,
- Figure 8:: Schematic drawing for a tray scan,
- Figure 9:: Source voltage sent to, and feedback signal received from the electrode in the capacitive sensor,
- Figure 10:: Top view of a tray with missing pipetting tips; scanning with eight channels,
- Figure 11:: Scan results for the tray presented in Figure 10, scanning along the x-direction,
- Figure 12:: Top view of a tray with missing pipetting tips; scanning with two channels,
- Figure 13:: Scan results for the tray presented in Figure 12 from the first and last channel; scanning along the x-direction,
- Figure 14:: Scan results for the tray presented in Figure 12 from the first channel; scanning along the y-direction for a single column,
- Figure 15:: Block diagram for the method for detecting pipetting tips in a laboratory automation apparatus.

### DETAILED DESCRIPTION OF EXEMPLARY EMBODIMENTS

Definition: The distal end or distal direction is defined by the flow direction for the liquid, thus the distal end of a pipette tip is defined by the outlet of the pipette tip and the proximal end is opposite to the distal end. The indefinite article "a" or "an" does not exclude a plurality. For example, "a pipetting head" does not exclude the fact that there may be two pipetting heads that functionally or structurally fulfill the purpose of "a pipetting head". Another wording for a pipetting head is a pipetting channel or tip adapter. A pipettor may be an Air Displacement Pipettor (ADP) where air is displaced by means of a motor-driven syringe pump moving a piston of a syringe in a cylinder for creating under/over pressure in the pipetting tip during liquid aspiration/dispensing. An example is disclosed in CH702974A1. Alternatively, an Air Restriction Pipettor (ARP) is used with a vacuum reservoir a pressure reservoir and a valve system for providing the under/over pressure in the pipetting tip, as disclosed in EP2569642A1.

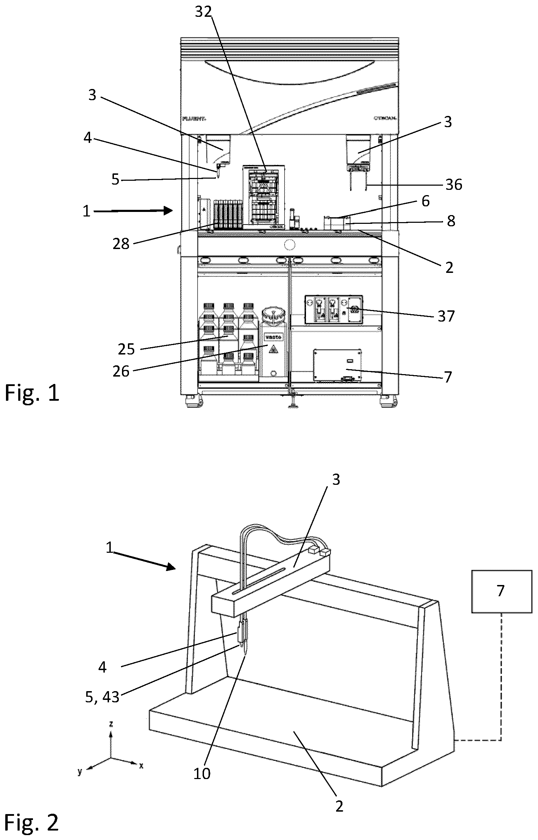

Figure 1 presents a laboratory automation apparatus 1 including a working table 2 supporting labware components, analytical testing devices and sample processing devices. Two robotic arms 3 are arranged above the working table 2 and one arm (left) is adapted to move a pipetting head 4 and the other arm (right) is adapted to move a gripper 36 in the space above the working table 2. The pipetting head 4 may be part of a pipettor that may include a fluid supply unit or pump unit 37. The pipettor may also be an air displacement pipettor for aspirating and dispensing liquids using a pipetting tip. An electrode 5 may be attached to the robotic arm 3 or to the pipetting head 4. A pipette tray 6 is positioned on the working table 2 at a tray position 8. The pipette tray may be positioned on top of a spacer 38 and/or on top of a box 39 for holding the pipette tray 6. The laboratory automation apparatus 1 includes a processor 7 or a computer system for controlling, for example, the movement of the robotic arms 3, the closure of gripper 36, the movement of pipetting head 4 or the fluid supply system or the air displacement pipettor coupled to the pipetting head 4. A rack with sample tubes 28 may be positioned on the working table 2. The processor 7 may include a storage unit a computing unit, a transceiver unit, or a communication unit. An electronic circuit connects the processor 7 to the robotic arms, the pipettor or a capacitive sensor as will be explained below. A display may be coupled to the electronic circuit and the display may include a user interface such as a touch screen.

A schematic drawing for a robotic arm 3 positioned on the working table of a laboratory automation apparatus is presented in Figure 2. The working table 2 defines an x-y plane and the robotic arm 3 is vertically distanced from the working table in the z-direction. The pipetting head 4 and electrode 5 are coupled to the robotic arm 3 to be moved by the robotic arm 3 in the x-y-z space above the working table 2. A pipetting tip 10 is attached or is attachable to the pipetting head 4. A pipetting tip may be fixedly mounted to the pipetting head 4 or the distal end of the pipetting head includes an adapter cone for engaging a collar of a disposable pipetting tip 10. The engagement may be a friction fit or a form fit engagement. The pipetting tips 10 are preferably constructed from an at least partially electrically conductive material. The pipetting tips may be, for example made from a graphite or carbon black filled polypropylene.

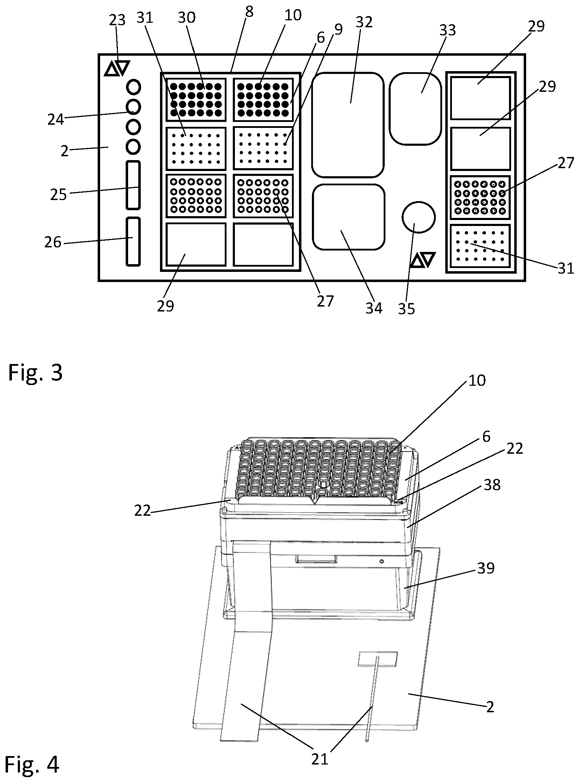

A top view on the working table 2 with labware components, analytical testing and sample processing equipment is presented in Figure 3. The working table 2 may include a capacitive reference object 23 that is used for calibration of the x-y position of the robotic arm 3 with respect to the working table 2, as explained in detail in Figures 3 and 4 of US20240217102A1. The tray position 8 may include a plurality of positions for holding pipetting trays 6 or well plates 27. There may be "vacant positions" 29 on the working table in that there is a space available for placing, or temporarily placing a labware component. The labware components preferably have a rectangular footprint according to an ANSI/SLAS standard (Microplate Standards, for example according to the 96 well-plate standard (ANSI SLAS 4-2004 (R2012): Well Positions). A 24-well plate format is presented in Figure 3. There may be pipetting trays 30 which are at least partially filled with pipetting tips 10. The empty pipetting trays 31 include passages 9 for receiving and holding the pipetting tips 10. Sample tubes or sample holders 24 or containers for processing liquids 25 or waste containers 26 may be located on top of the working table 2 (Figure 3) or below the working table as presented in Figure 1. Examples for sample processing devices may be a solid phase extraction device 32, a thermocycler 33 or a mixing device 35. An example for an analytical testing device may be a microplate reading device 34 for executing absorbance, fluorescence, or luminescence measurements on the processed samples in the microplates.

A perspective view for a pipette tray 6 positioned on the working table 2 is shown in Figure 4. The working table is at least partially constructed from an electrically conductive material such as steel, or aluminum and may serve as a reference electrode 21. The pipette tray 6 includes a plurality of pipetting tips 10 in a matrix arrangement according to the 96 well plate format. The pipetting trays 6 have a rectangular shape surrounded by a skirt and four corners 22. The pipette tray 6 may be stacked on top of a spacer 38 and/or a box 39 vertically distancing the pipette tray 6 from the working table 2. The pipette tray 6, the spacer 38 and the box 39 are constructed from an electrical insulating material or from an at least partially electrically conductive material. The pipette tray 6, the spacer 38 and the box 39 are preferably constructed by injection molding of a polymer selected from, for example, polypropylene, polyethylene, polystyrene, polycarbonate, acrylonitrile-butadiene-styrene copolymer. An additional reference electrode 21 which is grounded may be attached to the working table 2 and/or to tray 6, and/or to the spacer 38 and/or to the box 39.

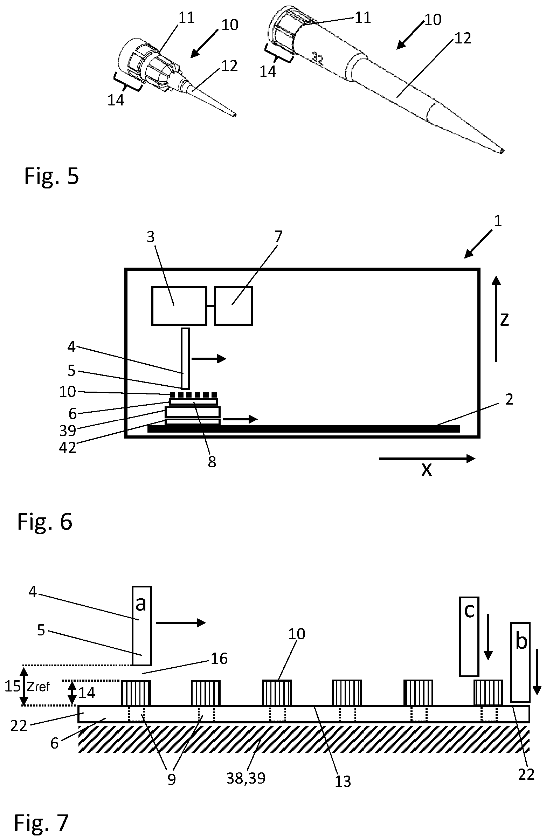

A perspective view of pipetting tips 10 for pipetting volumes of 10 µl (left), or 200 µl (right) is presented in Figure 5. The pipetting tips 10 are hollow and include a collar 11 which is sleeve shaped defining a collar height 14 with a proximal opening for receiving the pipetting head 4. A pipetting tube 12 is coupled to the collar 11 and the pipetting tube 12 has an external diameter below the external diameter of the collar or below the external dimensions of longitudinal ribs protruding from the collar. The distal end of the ribs provide the surface for contacting the top surface of the tray surrounding a passage. A dispensing opening is located at the distal end of the pipetting tip 10. The two pipetting tips have a length of 30 mm, respectively 58 mm.

A schematic drawing of a laboratory automation apparatus 1 with an electrode 5 for scanning the pipette tray 6 by relative movement between the tray and the electrode is presented in Figure 6. The tray 6 is positioned vertically between the electrode 5 and the working table 2 which is part of the reference electrode.

In an embodiment, the pipette tray 6 with the pipetting tips 10 (schematically presented by the collars penetrating in the proximal direction from the tray) is stacked on a box 39 which is placed on a shuttle 42. The electrode 5, for example the distal end of the pipetting head 4, is in a fixed position at a scan height above the pipette tray 6. Alternatively, the electrode is a separate electrode installed at a fixed position along the shuttle pathway for the shuttle 42, for example in a pass-through tunnel. The movement of the shuttle 42 with respect to the electrode 5 is controlled by processor 7 which also directs the input signal (source voltage) to the electrode and receives the feedback signal.

In another embodiment also presented in Figure 6, the pipette tray 6 is at a fixed tray position 8 and the pipetting head 4 with the electrode 5 is directed by the robotic arm 3 to scan or hover over the pipette tray 6 for detecting the capacitive signal once a source voltage is directed to the electrode 5.

A detailed lateral view of Figure 6 is presented in Figure 7 displaying the pipetting head 4 with the electrode 5 at a reference height Z_{ref} or scan height 15 above the pipette tray 6 comprising six pipetting tips 10. The collars penetrate in the z-direction from the top surface 13 of the pipette tray by the collar height 14, leaving an air gap 16 between the top surface of the collar and the distal end of the electrode 5. The pipetting tubes 12 are received in the passages 9 of the tray 6 and the tray is positioned on top of a spacer 38 or on top of a box 39. The top surface 13 of the tray is exposed between the collars of two adjacent pipetting tips. Three scenarios will be described in the following: a) Capacitive scanning of the tray, b) Detection of the tray position in z-axis, c) Detection of the size of the pipetting tips, each scenario is indicated with a, b, or c in Figure 7:
a) Capacitive scanning of the tray: The electrode 5 is moved relative to the tray 6 either by moving the electrode 5 using the robotic arm and/or by moving the tray using the shuttle. A source voltage is directed to the electrode 5 while moving the tray relative to the electrode. The movement of the electrode (or shuttle) may be at a speed of at least 1mm/s, preferably at least 5 mm/s, more preferably at least 10 mm/s, more preferably at least 50 mm/s, more preferably at least 100 mm/s. A change in capacitance is detected depending on the dimensions of the air gap 16 (for example the area A or height of the air gap 16) and/or the difference in electrical conductivity between the tray and the pipetting tips. The difference in electrical conductivity results in a different dielectric constant ε for the tray and pipetting tips. A change in capacitance during relative movement indicates the presence or absence of pipetting tips in the tray.
b) Tray detection: The pipetting head 4 is moved in the x-y plane to the skirt section of a pipette tray 6, for example to one of the four corners 22 of the tray. The pipetting head is lowered in a force-controlled manner until the vertical position of the tray is detected by contact. This may be repeated for every corner 22 of the tray for calculating the average z-position of the tray and for determining the scan height 15 as an offset to the average z-position. The z-positions at each corner 22 may also be used to calculate the difference between two corner positions for detecting tilting or misplacement of the tray on the box. A threshold value may be stored in the storage unit and once the difference between two opposite corner values amounts to at least 0.5 mm, preferably at least 1 mm more preferably at least 2 mm, then this is an indication for misplacement which may lead automatically to a hold of the programmed test procedure. An alarm signal may be generated and/or sent to the user interface or to an external device.
c) Detection of the size of the pipetting tips: The electrode 5 is moved to an edge of a collar 14 and lowered in a force-controlled manner. A source voltage is directed to the electrode 5 upon abutment and the feedback signal, which is indicative of the size or geometry (for example length, surface area or mass) of the reference electrode 5 has been extended by the pipetting tip 10. The different geometries of the pipetting tips (see Figure 5) lead to different extensions and surface areas for the electrode. The feedback signal may be compared with stored capacitance values attributed to the different sizes of the pipetting tips 10.

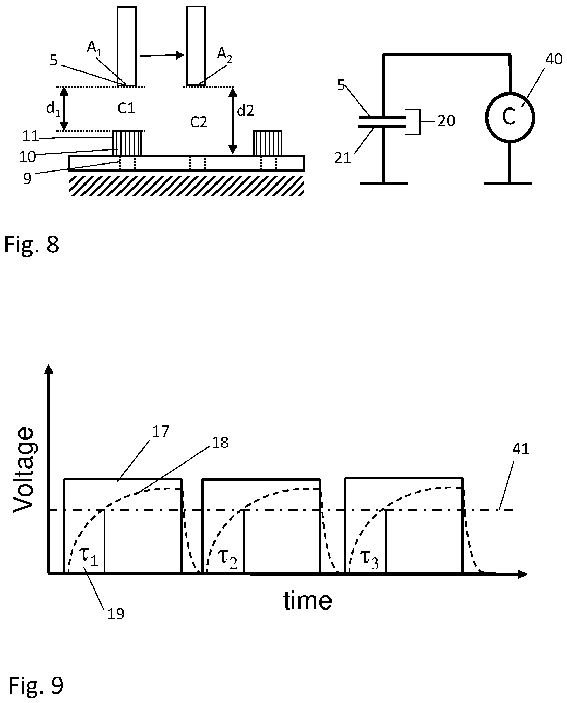

A schematic drawing for a tray scan with the different capacitances C1 and C2 involved is presented in Figure 8. The charging and discharging characteristics for the capacitive sensor 20 is presented in Figure 9. The capacitance C1 represents the position whereby the electrode 5 is exactly above a collar 11 of a pipetting tip 10. The capacitance C2 represents the position whereby no pipetting tip is inserted in the tray or whereby a next collar 11 is approached. The capacitance C1 depends on the local dielectric constant ε₁, the height of the air gap d₁ and the surface area of the of the electrode A₁. The capacitance C2 depends on the local dielectric constant ε₂, the height of the air gap d₂ and the surface area of the of the electrode A₂ (in this example the surface areas A₁ and A₂ are identical). The combined dimensions d, A and dielectric constants ε for air, for the pipetting tip 10, for the tray 6, and parasitic capacitances originating from the surrounding parts provide the lump sum capacitances C1 and C2. The total capacitance is measured using capacitive measuring unit 40, for example by using a comparator unit for detecting the charge time of the capacitor once a source voltage is directed to the electrode 5.

A signal generator is controlled by the processor and coupled to the electronic circuit and an input signal (source voltage) is directed to the electrode 5. The input signal may be a modulated signal with, for example, a pulse-shaped signal and essentially represents a switch in the electronic circuity such that the electrode 5 is charged when the switch is closed and discharged when the switch is opened. The charging and discharging of the capacitor is detected in a feedback signal and the speed for the charging and discharging depends on the capacitances C1 and C2 present in the capacitor. The source voltage may be a Pulse Width Modulated (PWM) signal 17 as depicted in Figure 9. The voltage is increased/decreased stepwise, and the feedback signal 18 (capacitor voltage) increases and levels off towards the maximum source voltage 17. The frequency of the PWM signal may be in the Kilohertz range, for example between 10 and 1000 kHz, preferably between 100 and 500 kHz such that the capacitor is partially charged. The charge time 19 for the capacitance sensor 20 is defined by the time required for reaching a threshold voltage. During each cycle of the PWM signal a charge time τᵢ 19 may be detected from the feedback signal 18 and averaged values may be computed. The charge time 19 is defined in the example by the time required for reaching a threshold voltage 41 which is measured for example using the comparator 40.

### Example 1: Scanning the tray using eight electrodes 5:

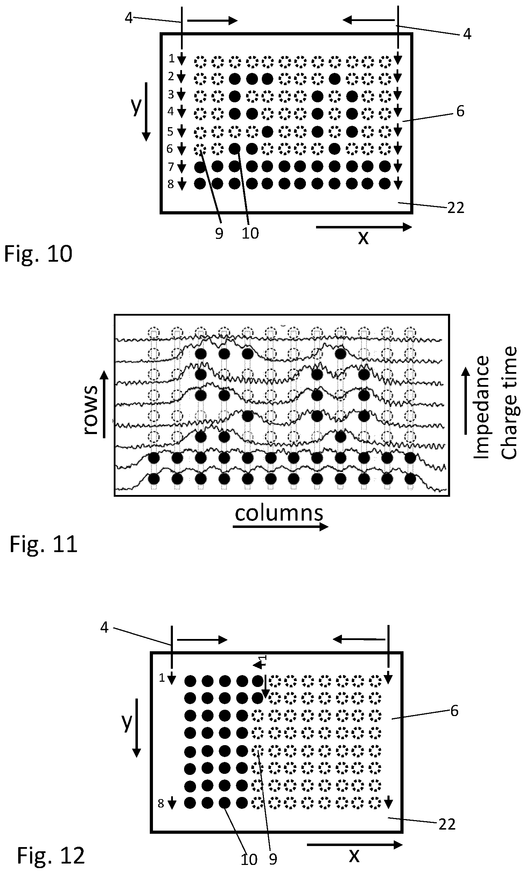

Figure 10 presents a top view for a pipette tray 6 which is partially filled with pipetting tips 10 (closed circles) and passages 9 without a pipetting tip (dotted circles). The robotic arm includes eight pipetting heads 4 or so-called eight channels each labelled with the number printed next to the arrow representing the electrode 5 for each pipetting head. In this example, the pipetting head 4 has a dual functionality; pick up of the pipetting tips before aspiration of liquid, and as an electrode 5 prior to pick-up of the pipetting tips 9. The x-y position may be first calibrated by hovering the electrode 5 over the capacitive reference object 23 on the working table 2.

Channels or pipetting heads 1 and 8 may first be used for detecting the z-position of the pipette tray by lowering the pipetting heads until abutment in a corner section 22 of the pipetting tray. From the four heights in the corners 22, the average z-height of the tray is calculated for determining the scan height 15. The test procedure may be stopped or halted in case the differences in corner heights indicates that a pipette tray is tilted or not correctly mounted on the working table or on the stack including a box or spacer. The eight channels with the 8 electrodes subsequently perform a first linear scan from the left to the right followed by a second scan from the right to the left over the pipetting tray. The capacitance values are measured based on the feedback signal received from a PWM modulated input signal at a frequency of approximately 350 KHerz. Averages for the impedance or charge time are calculated for each channel from the first and second scans as depicted in Figure 10. Alternatively, a reference scan is performed before insertion of the tray with the pipetting tips and the reference scan of the box or holder may be used for subtracting the parasitic capacitances or ambient capacitance from the first/second scans before averaging both scans, or by subtracting the reference scan from the averaged scan. Alternatively a reference scan is made using an empty tray.

The measured impedance (or charge time) from the linear scans for each of the eight channels is depicted in Figure 11 (axis on the right, the eight base lines are staggered for clarity) and the values are superimposed on the location of the pipetting tips. The capacitance increases when approaching the collar of a conductive pipetting tip and decreases when crossing an empty passage. The capacitive signal of two adjacent pipetting tips superimpose into a peak value between the two tips as will be presented in more detail below.

### Example 2: Scanning the tray using two electrodes 5

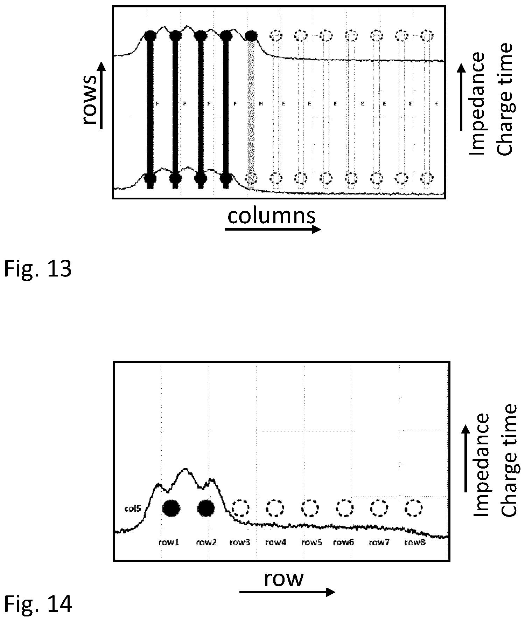

Figure 12 presents a top view for a pipette tray 6 which is partially filled with pipetting tips 10 (closed circles) and passages 9 without a pipetting tip (dotted circles). The robotic arm includes eight pipetting heads 4 each indicated with the number printed next to the arrows representing the electrodes for the pipetting heads but only two channels (1 and 8) are used for scanning the tray for the presence or absence of pipetting tips. The position of the tray may be first checked using the corners of the tray 22 or the rim of the pipette tray 6 as explained above. The linear scans for detecting the capacitance of the dielectric medium between the electrode 5 and the reference electrode is executed using channels 1 and 8 only. The basic assumption is that if pipetting tips are present in the first and last position in a column, then also tips are present in the intermediate positions. The results for the two scans along the x-axis are presented in Figure 13. The resonance in columns 1 to 4 shows that both the first and last position in the column are occupied by a pipetting tip and in column 5, there is only a detected signal for a pipetting tip for the first position. The processor recognizes the filled columns and subsequently directs the pipetting head 4 with electrode 5 to the partially filled column (in this example column number five) and performs a scan along the y-axis and the results are presented in Figure 14. The first and second row in column 5 include a pipetting tip and the detected capacitance values indicates a maximum between the two pipetting tips which may be attributed to the sum of the two peak values for the tips in row 1 and row 2 and the background capacitance of the tips in the next column 4. The same procedure may be carried out with a robotic arm including four pipetting heads or two pipetting heads. The pipetting heads are spread that channels 1 and 4 respectively channels 1 and 2 scan the rows one and eight. The procedure may be carried out with a robotic arm having a single pipetting head. The scan of row one and of row eight may be performed in sequence.

The measurements in examples 1 or 2 may be amended by a check on the size of the pipetting tips. The pipetting head 4 or electrode 5 may be lowered until the pipetting head abuts the pipetting tip or a rim of the pipetting tip of the collar. The geometry of the conductive electrode 5 is changed upon contact leading to a different capacitance measurement which can be used to identify the size of the pipetting tip.

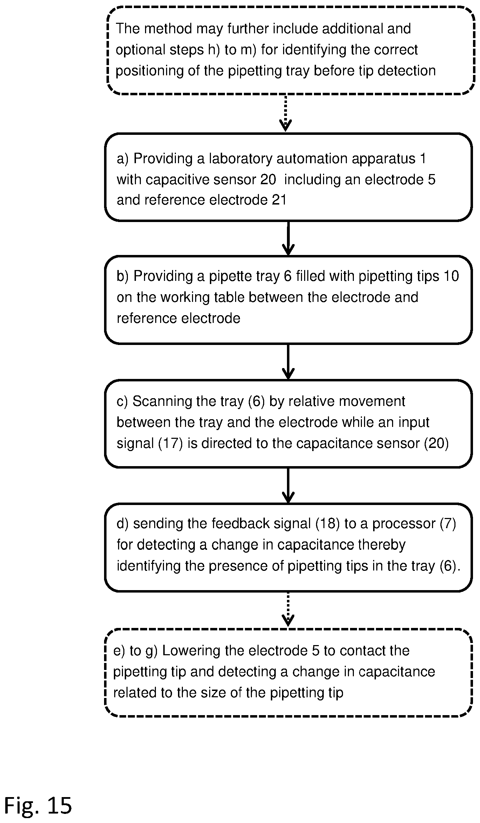

The method for detecting pipetting tips in a laboratory automation apparatus is presented in the block diagram in Figure 15.
a) Providing a laboratory automation apparatus 1 with capacitive sensor 20 including an electrode 5 and reference electrode 21,
b) Providing a pipette tray 6 filled with pipetting tips 10 on the working table between the electrode and reference electrode,
c) Scanning the tray 6 by relative movement between the tray and the electrode while an input signal 17 is directed to the capacitance sensor 20,
d) Sending the feedback signal 18 from the capacitance sensor to a processor 7 which is configured to detect a change in capacitance thereby identifying the presence or non-presence of pipetting tips in the tray.

The relative movement in step c) may be provided by moving the tray relative to a fixed electrode, or by moving the electrode relative to the tray or by moving both the electrode and the tray relative to another.

The method may include additional and optional steps e) to g)
e) lowering the electrode 5 from a scan height 15 to contact the top surface of a collar 11 of a conductive pipetting tip 10 thereby extending the size of the electrode,
f) directing the input signal 17 to the capacitance sensor 20 and detecting a feedback signal 18 from the extended electrode,
g) sending the feedback signal 18 to the processor 7 which is configured to detect a change in capacitance related to the electrode configuration and identify the size of the pipetting tip 10.

The method may further include additional and optional steps h) to m) for identifying the correct positioning of the pipette tray which may be executed before starting with step a):
h) directing at least one pipetting head 4 to a corner 22 of the tray 6 using the robotic arm 3,
i) lowering the pipetting head 4 to contact the tray 6 to identify a first z-reference height,
j) raising the pipetting head 4,
k) directing the at least one pipetting head to an opposite corner 22 of the tray 6,
l) lowering the pipetting head 4 to contact the tray to identify a second z-reference height,
m) calculating an average z-reference height defining the reference for the scan height 15 for moving the pipetting head above the tray.
wherein the difference between the first and second z-reference height may be calculated for detecting misplacement or tilting of the tray 6 when the difference exceeds a predefined threshold value.

### LIST OF REFERENCE SIGNS

- 1: Laboratory automation apparatus
- 2: Working table
- 3: Robotic arm
- 4: Pipetting head
- 5: Electrode
- 6: Pipetting tray
- 7: Processor
- 8: Tray position
- 9: Passage
- 10: Pipetting tips
- 11: Collar
- 12: Pipetting tube
- 13: Top surface tray
- 14: Collar height
- 15: Scan height
- 16: Air gap
- 17: Input signal, source voltage
- 18: Feedback signal
- 19: Charge time
- 20: Capacitive sensor
- 21: Reference electrode
- 22: Corner of tray
- 23: Capacitive reference object
- 24: Sample tubes
- 25: Processing liquid
- 26: Waste container
- 27: Well plate
- 28: Racks with sample tubes
- 29: Vacant position
- 30: Filled tray
- 31: Empty tray
- 32: Solid phase extraction device
- 33: Thermocycler
- 34: Microplate reader
- 35: Mixing device
- 36: Gripper
- 37: Pump unit
- 38: Spacer
- 39: Box
- 40: Comparator
- 41: Threshold voltage
- 42: Shuttle
- 43: Adapter cone
- A1, A2: Area of the electrode
- d1, d2: Height of air gap between electrode and collar

## Claims

1. A method for detecting pipetting tips in a laboratory automation apparatus, the laboratory automation apparatus (1) comprising:
- a working table (2) defining an x-y plane,
- an electrode (5) and a reference electrode (21) providing a capacitive sensor (20),
- a pipette tray (6) located on the working table (2), between the electrode and the reference electrode (21), the pipette tray (6) comprising a plurality of passages (9) organized in a matrix arrangement,
- a plurality of pipetting tips (10) each with a proximal collar (11) coupled to a pipetting tube (12),
- the collars (11) of the pipetting tips being adapted to engage a pipetting head (4) of the laboratory automation apparatus,
- the pipetting tubes (12) being received in at least a part of the plurality of passages (9) whereby the bottom surface of each collar (11) abuts the top surface (13) of the tray (6) such that the top surface of each collar (11) is vertically distanced from the top surface (13) of the tray by the collar height (14), and
- wherein the electrical conductivity of the tray (6) differs from the electrical conductivity of the pipetting tips (10),
the method comprising the following steps:
- scanning the tray (6) by relative movement between the tray and the electrode while an input signal (17) is directed to the capacitance sensor (20) and detecting a feedback signal (18) from the electrode (5),
- sending the feedback signal (18) to a processor (7) which is configured to detect a change in capacitance for the capacitive sensor (20) thereby identifying the presence or non-presence of pipetting tips (6) in the tray (6).

2. The method according to claim 1 wherein the laboratory automation apparatus further comprises:
- a robotic arm (3),
- the pipetting head (4) is coupled to the robotic arm (3), and the electrode (5) is coupled to the pipetting head (4),
- the processor (7) is operatively coupled to the robotic arm (3) and to the electrode (5) by an electronic circuit,
- the processor being configured for controlling the movement of the robotic arm (3) with the pipetting head (4) and the electrode (5) in a space above the working table (2),
- the tray (6) located at a tray position (8) on the working table and
wherein scanning the tray (6) by relative movement between the tray and the electrode comprises:
- directing the robotic arm (3) to the tray position (8) on the working table (2),
- lowering the pipetting head (4) to a scan height (15) defined by a z-position above the pipette tray leaving an air gap (16) between the top surface of the collars (11) and the electrode (5),
- moving the electrode parallel to the x-y plane above the tray (6).

3. The method according to claim 2, wherein the electrode (5) is the adapter cone of the pipetting head (4) or is the distal end of an at least partially electrically conductive pipetting tip (10) attached to the pipetting head (4).

4. The method according to claims 2 or 3, wherein the robotic arm (3) comprises a plurality of pipetting heads in a row arrangement and each pipetting head (4) comprises an electrode (5) coupled to the pipetting head providing a capacitive sensor (20) with the reference electrode (21).

5. The method according to any of claims 2 to 4, comprising the following additional steps:
- lowering the electrode (5) from the scan height (15) to contact the top surface of a collar (11),
- directing the input signal (17) to the capacitance sensor (20) and detecting the feedback signal (18) from the electrode,
- sending the feedback signal (18) to the processor (7) which is configured to detect a change in capacitance related to the electrode configuration and identify the size of the pipetting tip (10).

6. The method according to any of claims 2 to 5, wherein directing the robotic arm (3) to the tray position (8) on the working table (2) comprises the following sub-steps:
- directing at least one pipetting head (4) to a corner (22) of the tray (6) using the robotic arm (3),
- lowering the pipetting head (4) to contact the tray (6) to identify a first z-reference height,
- raising the pipetting head (4),
- directing the at least one pipetting head to an opposite corner (22) of the tray (6),
- lowering the pipetting head (4) to contact the tray to identify a second z-reference height,
- calculating an average z-reference height defining the reference for the scan height (15) for moving the pipetting head above the tray.

7. The method according to claim 6, wherein the difference between the first and second z-reference height is calculated for detecting misplacement or tilting of the tray (6) when the difference exceeds a predefined threshold value.

8. The method according to claim 1 wherein the laboratory automation apparatus further comprises:
- the electrode (5) located at a fixed position x-y position and a fixed scan height (15) in the space above the working table (2),
- a shuttle (42) configured for linear movement below the electrode (5) along a shuttle pathway,
- the tray (6) with the pipetting tips (10) positioned onto the shuttle (42),
- the processor (7) operatively coupled to the shuttle (42) and to the electrode (5) by an electronic circuit,
- the processor (7) being configured for controlling the movement of the shuttle with respect to the electrode (5),
wherein scanning the tray (6) by relative movement between the tray and the electrode comprises:
- moving the shuttle with the tray (6) below the electrode (5).

9. The method according to any of the previous claims wherein the plurality of passages (9) in the tray (6) are arranged to leave a free space available above the top surface of the tray between the collars (11) of two adjacent pipetting tips (10) and the change in capacitance is detected as a change in charge time (19) for the capacitive sensor (20) related to the vertical step between the top surface of the collar and the top surface of the tray and/or the difference in electrical conductivity between the tray (6) and the pipetting tips (10).

10. The method according to any of the previous claims wherein the change in capacitance is averaged over multiple scans of the tray.

11. The method according to any of the previous claims, wherein the processor (7) is configured to generate an image of the matrix arrangement for the pipetting tips presenting the absence or presence of pipetting tips (10) and wherein the generated image is displayed on a display of the laboratory automation apparatus (1) and/or is sent to an external device.

12. A laboratory automation apparatus (1) with a pipetting tip detection functionality comprising:
- a working table (2) defining an x-y plane,
- a robotic arm (3) configured to be orthogonally moved in the space above the working table (2),
- a pipetting head (4) coupled to the robotic arm (3),
- an electrode (5) coupled to the pipetting head (4) providing a capacitive sensor (20) with a reference electrode (21),
- a processor (7) operatively coupled to the robotic arm (3) and to the capacitive sensor (20) by an electronic circuit, the processor (7) being configured for directing and controlling the movement of the robotic arm (3) with the pipetting head (4) and the electrode (5),
- a pipette tray (6) located at a tray position (8) on the working table (2) between the electrode (5) and the reference electrode (21), the pipette tray (6) comprising a plurality of passages (9),
- a plurality of pipetting tips (10) each with a proximal collar (11) coupled to a pipetting tube (12),
- the collar (11) being adapted to receive the pipetting head (4), and
- the pipetting tubes (12) being received in at least a part of the plurality of passages (9) such that the bottom surface of each collar (11) abuts the top surface (13) of the tray (6) thereby releasably holding the pipetting tips (10) to the tray (6), and the top surface of each collar (11) being vertically distanced from the top surface (13) of the tray by the collar height (14),
- the plurality of passages (9) in the tray (6) being arranged to leave a free space available for the top surface (13) of the tray between the collars (11) of two adjacent pipetting tips (10),
- wherein the electrical conductivity of the tray (6) differs from the electrical conductivity of the pipetting tips (10),
**characterized in that**
- the robotic arm (3) is configured to hover the pipetting head (4) with the electrode (5) over the tray (6), and
- the processor (7) is configured to direct an input signal (17) to the electrode (5) and receive a response signal (18) from the capacitance sensor (20), and to identify the presence or non-presence of pipetting tips (10) in the tray (6) by detecting a change in capacitance related to the vertical step between the top surface of the collar (11) and the top surface (13) of the tray (6) and/or the difference in electrical conductivity between the tray (6) and the pipetting tips (10).

13. The laboratory automation apparatus according to claim 12, wherein the electrode (5) is the adapter cone of the pipetting head (4) or is the distal end of an at least partially conductive pipetting tip (10) attached to the pipetting head.

14. A computer program comprising instructions which, when the program is executed by a computer, cause the computer to carry out the method of claims 1 to 11.

15. A computer-readable medium having stored thereon the computer program of claim 15.
